# EUROPEAN PATENT APPLICATION

(11) **EP 4 621 986 A1**
(43) Date of publication of application: **24.09.2025**
(21) Application number: 23891074.9
(22) Date of filing: 07.06.2023
(51) Int. Cl.: H01P 1/203

(54) **FILTER GROUP AND WIRELESS COMMUNICATION MODULE**

(30) Priority: 15.11.2022 JP 2022182861
(71) Applicant: Fujikura Ltd., Tokyo 135-8512 (JP)
(72) Inventor: HASEGAWA, Yuta, Sakura-shi, Chiba 285-8550 (JP)
(74) Representative: Plasseraud IP
(86) International application number: PCT/JP2023/021098
(87) International publication number: WO 2024/105912

(57) **Abstract**

To improve isolation between a plurality of filters formed in a single multilayer substrate, in a filter group (10), a first filter and a second filter (filters 10a and 10b) formed in the multilayer substrate (11) each include a strip line constituted by a signal pattern (14a, 14b) and paired ground conductor layers (12, 13), and a first area (area 13a) and a second area (area 13b) in the ground conductor layer (13) are disconnected from each other.

## Description

### Technical Field

The present invention relates to a filter group. The present invention also relates to a wireless communication module including a filter group.

### Background Art

In these days, with prevalence of 5G NR to meet the growing demand for wireless communication, high-frequency devices handling millimeter waves typified by, for example, n257 (not less than 26.50 GHz and not more than 29.50 GHz) and n258 (not less than 24.75 GHz and not more than 27.50 GHz) are attracting attention. For example, (a) and (c) of Fig. 3 of Non-patent Literature 1 disclose a filter group applicable to a high-frequency signal falling within n257 or n258.

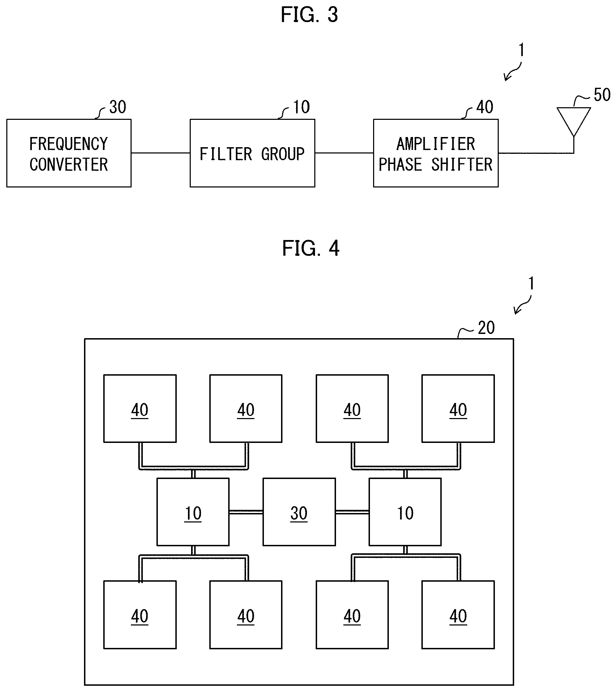

As illustrated in (c) of Fig. 3 of Non-patent Literature 1, the filter group includes two filters provided so as to be mirror symmetrical. As illustrated in (a) of Fig. 3 of Non-patent Literature 1, each filter uses a strip line including a signal pattern formed in an inner layer of a multilayer substrate and paired ground conductor layers formed on respective paired main surfaces of the multilayer substrate and sandwiching the signal pattern. The signal pattern of each filter includes signal lines each provided with an input/output port at each end part thereof, and six resonators (see (c) of Fig. 3). These six resonators are designed so that each filter functions as a bandpass filter.

Figs. 1 and 2 of Patent Literature 1 disclose a wireless communication module including such a filter group. The wireless communication module is one of application examples of the filter group disclosed in Non-patent Literature 1.

This wireless communication module includes a wireless module substrate; a frequency converter, an amplifier phase shifter, and a bandpass filter that are mounted on the wireless module substrate; and an antenna. The frequency converter, the bandpass filter, the amplifier phase shifter, and the antenna are provided in this order.

### Citation List

### [Patent Literature]

[Patent Literature 1]
International Publication No. WO 2022/014066

### [Non-patent Literature]

[Non-patent Literature 1]
Yuta Hasegawa et. al., Proceedings of the 51st European Microwave Conference, p.437-p.440, 4-6 April 2022.

### Summary of Invention

### Technical Problem

However, in the filter group illustrated in (a) and (c) of Fig. 3 of Non-patent Literature 1, it is difficult to improve isolation between the two filters. There is a possibility that the isolation between the two filters has an impact on characteristics of wireless communication modules, which are application examples of the filter group.

An aspect of the present invention has been made in light of the foregoing problem, and it is an object thereof to improve isolation between a plurality of filters formed in a single multilayer substrate.

### Solution to Problem

A filter group in accordance with an aspect of the present invention includes a first filter and a second filter that are formed in a single multilayer substrate. In order to solve the foregoing problem, in the filter group, the first filter and the second filter each include a strip line constituted by a signal pattern formed in an inner layer of the multilayer substrate and paired ground conductor layers that are formed on respective paired main surfaces of the multilayer substrate and that sandwich the signal pattern, the paired ground conductor layers each include, in a case where the signal pattern is seen in a plan view, a first area overlapping the signal pattern of the first filter and a second area overlapping the signal pattern of the second filter, and the first area and the second area in at least one of the paired ground conductor layers are disconnected from each other.

A wireless communication module in accordance with an aspect of the present invention includes: the multilayer substrate as a first substrate; a second substrate; a frequency converter; the filter group in accordance with any one of Aspects 3 to 5 above; an amplifier phase shifter; and an antenna. In the wireless communication module, the frequency converter, the filter group, the amplifier phase shifter, and the antenna are mounted on the second substrate in this order, and the lands of the filter group and the second substrate are connected to each other.

### Advantageous Effects of Invention

An aspect of the present invention makes it possible to improve isolation between a plurality of filters formed in a single multilayer substrate.

### Brief Description of Drawings

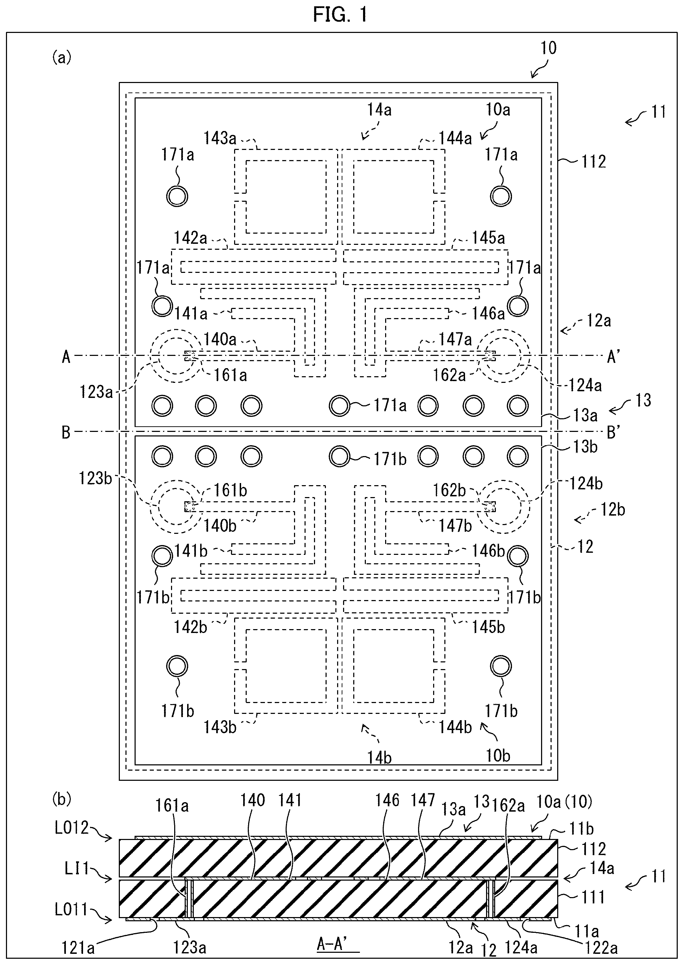

(a) of Fig. 1 is a plan view illustrating a filter group in accordance with Embodiment 1 of the present invention. (b) is a cross-sectional view illustrating the filter group illustrated in (a).
Fig. 2 is a plan view illustrating a variation of the filter group illustrated in Fig. 1.
Fig. 3 is a block diagram illustrating a wireless communication module in accordance with Embodiment 2 of the present invention.
Fig. 4 is a plan view schematically illustrating the wireless communication module illustrated in Fig. 3.
Fig. 5 is a cross-sectional view illustrating a substrate and a filter group that are included in the wireless communication module illustrated in Fig. 3.
(a) to (c) of Fig. 6 are graphs showing frequency dependencies of S parameters in Examples 1 to 3 of the present invention, respectively, and (d) of Fig. 6 is a graph showing frequency dependencies of S parameters in Comparative Example of the present invention.

### Description of Embodiments

### Embodiment 1

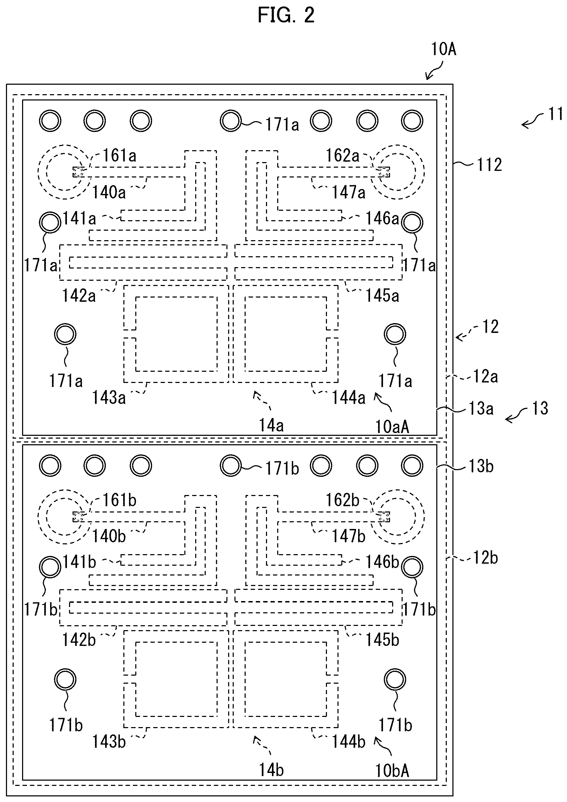

With reference to Figs. 1 and 2, the following description will discuss a filter group 10 in accordance with Embodiment 1 of the present invention. (a) of Fig. 1 is a plan view illustrating the filter group 10. (b) of Fig. 1 is a cross-sectional view illustrating the filter group 10 and taken along line A-A' illustrated in (b) of Fig. 1. Note that the plan view of (a) of Fig. 1 is a plan view obtained in a case where the filter group 10 is seen from a normal direction of a main surface 11a of a multilayer substrate 11 constituting the filter group 10. Fig. 2 is a plan view illustrating a filter group 10A, which is a variation of the filter group 10.

As illustrated in (a) of Fig. 1, the filter group 10 includes a single multilayer substrate 11, and a filter 10a and filter 10b that are formed in the multilayer substrate 11. The filter 10a and the filter 10b are one example of a first filter and one example of a second filter, respectively. As described later, the filter 10a and the filter 10b each include a strip line. That is, the filter 10a and the filter 10b are each one example of a strip line filter. Note that the number of the filters formed in the multilayer substrate 11 is not limit to two, but may be three or more.

As in the case of the filter group disclosed in Non-patent Literature 1, the filters 10a and 10b included in the filter group 10 are designed to be applied to millimeter-wave, high-frequency signals typified by, for example, n257 (not less than 26.50 GHz and not more than 29.50 GHz) and n258 (not less than 24.75 GHz and not more than 27.50 GHz). In this embodiment, the filters 10a and 10b are designed so that the center frequency and the bandwidth of the pass band are respectively 28.0 GHz and 3 GHz in order to be applied to high-frequency signals included in n257. Note, however, that the characteristics of the filters 10a and 10b can be designed as appropriate depending on applications thereof.

The filter group 10 can be applied to a wireless communication module, as described later in Embodiment 2. In this case, high-frequency signals supplied from a frequency converter are inputted to the filters 10a and 10b, and one high-frequency signal (for example, the high-frequency signal that has passed through the filter 10a) can be used as a high-frequency signal for V-polarized wave, and the other high-frequency signal (for example, the high-frequency signal that has passed through the filter 10b) can be used as a high-frequency signal for H-polarized wave. In this use, the filter 10a and the filter 10b preferably have the same transmission characteristics. That is, the filter 10a and the filter 10b are preferably configured in the same manner.

### <Configuration of filter>

The following description will discuss the filter 10a and the filter 10b. In the filter group 10, the filter 10a and the filter 10b are configured to be mirror symmetrical with respect to a plane that passes the line B-B' illustrated in (a) of Fig. 1 and that is orthogonal to the main surface 11a of the multilayer substrate 11, as a symmetrical plane. Therefore, the filter 10a and the filter 10b are positioned with a 180-degree difference in orientation in a case where seen in a plan view as illustrated in (a) of Fig. 1, but are configured to be substantially the same. Therefore, the following will describe the configuration of the filter 10a, and the configuration of the filter 10b will not be described. Note that for components marked with "a" at the end of their reference signs among the components of the filter 10a, "a" can be read as "b". This replacement allows understanding of the configuration of the filter 10b as well as the configuration of the filter 10a.

The filter 10a includes the multilayer substrate 11, a ground conductor layer 12, a ground conductor layer 13, a signal pattern 14a, vias 161a and 162a, and eleven through vias 171a.

### (Multilayer substrate)

The multilayer substrate 11 includes the substrates 111 and 112 and an adhesive layer. In (b) of Fig 1, the adhesive layer is not illustrated.

The substrates 111 and 112 are two plate-like members each made of a dielectric. In the state illustrated in (b) of Fig. 1, the substrate 112 is disposed above the substrate 111. Hereinafter, a layer provided on the main surface 11a of the paired main surfaces of the substrate 111 which is farther from the substrate 112 will be referred to as an outer layer LO11, a layer provided on the main surface 11b of the paired main surfaces of the substrate 112 which is farther from the substrate 111 will be referred to as an outer layer LO12, and a layer between the substrates 111 and 112 will be referred to as an inner layer LI1.

In this embodiment, the substrates 111 and 112 are each made of a liquid crystal polymer resin. Note that the dielectric constituting the substrates 111 and 112 is not limited to the liquid crystal polymer resin, and may alternatively be a glass epoxy resin, an epoxy composition, a polyimide resin, or the like. In this embodiment, each of the substrates 111 and 112 has a rectangular shape in a plan view. Note that the shape of each of the substrates 111 and 112 is not limited to the rectangular shape, and can be selected as appropriate.

The adhesive layer is provided to the inner layer LI1, and bonds the substrates 111 and 112 to each other. An adhesive constituting the adhesive layer is not limited to any particular type, and may be selected as appropriate from among existing adhesives.

### (Ground conductor layer)

The ground conductor layer 12 is constituted by a conductor film provided to the outer layer LO11. The ground conductor layer 13 is constituted by a conductor film provided to the outer layer LO12. The ground conductor layers 12 and 13, which are respectively formed on the main surfaces 11a and 11b that are the paired main surfaces of the multilayer substrate 11, are one example of paired ground conductor layers sandwiching the signal pattern 14a described later. The ground conductor layers 12 and 13 constitute a strip line, together with the signal pattern 14a described later.

In one aspect of the present invention, among the ground conductor layers 12 and 13, the ground conductor layer 12 can be omitted. In a case where the ground conductor layer 12 is omitted, the ground conductor layer 13 constitutes a microstrip together with the signal pattern 14a described later. The ground conductor layer 12 is one example of another ground conductor layer, and the ground conductor layer 13 is one example of one ground conductor layer.

In this embodiment, the ground conductor layers 12 and 13 are each made of copper. Note that the conductor constituting the ground conductor layers 12 and 13 is not limited to copper, and may alternatively be gold, aluminum, or the like.

As illustrated in (a) of Fig. 1, in a case where the ground conductor layers 12 and 13 and the signal patterns 14a and 14b are seen in a plan view, the ground conductor layer 12 includes an area 12a and an area 12b, and the ground conductor layer 13 includes an area 13a and an area 13b. The area 12a and the area 13a are areas overlapping the signal pattern 14a of the filter 10a in a plan view, and the area 12b and the area 13b are areas overlapping the signal pattern 14b of the filter 10b in a plan view.

In this embodiment, a conductor pattern in which the area 12a and the area 12b are continuous is employed as the ground conductor layer 12, and a conductor pattern in which the area 13a and the area 13b are disconnected is employed as the ground conductor layer 13. Note that the expression "disconnected" here refers to a state in which the area 13a and the area 13b are separated in a plan view, and the area 13a and the area 13b are insulated from each other when the filter group 10 is not mounted on another substrate (for example, a multilayer substrate 20 described in Embodiment 2).

However, in one aspect of the present invention, it is also possible (1) that a conductor pattern in which the area 12a and the area 12b are disconnected is employed as the ground conductor layer 12 and a conductor pattern in which the area 13a and the area 13b are disconnected is employed as the ground conductor layer 13 or (2) that a conductor pattern in which the area 12a and the area 12b are disconnected is employed as the ground conductor layer 12 and a conductor pattern in which the area 13a and the area 13b are continuous is employed as the ground conductor layer 13. Note that the filter group 10A illustrated in Fig. 2 employs the configuration (1) above. In a case where the number of the filters formed in the multilayer substrate 11 is three or more, the paired ground conductor layers each include a plurality of areas overlapping the signal patterns of the respective filters in a plan view of the signal patterns of the filters. In such a case, the plurality of areas overlapping the signal patterns of the filters only needs to be disconnected from each other in at least one of the paired ground conductor layers.

As illustrated in (b) of Fig. 1, anti-pads 121a and 122a are formed on the ground conductor layer 12. In (a) of Fig. 1, the reference signs 121a and 122a are not illustrated. The anti-pad 121a is formed so as to surround at least part of an end part of a line 140a in a plan view. The anti-pad 122a is formed so as to surround at least part of an end part of a line 147 in a plan view. Hereinafter, an area surrounded by the anti-pad 121a will be referred to as a land 123a, and an area surrounded by the anti-pad 122a will be referred to as a land 124a (see (b) of Fig. 1). The lands 123a and 124a function as paired input/output ports in the filter 10a. The paired lands 123a and 124a formed in the area 12a of the ground conductor layer 12 are described here. Similarly, in the area 12b of the ground conductor layer 12, paired anti-pads 121b and 122b and paired lands 123b and 124b are formed. The lands 123b and 124b function as paired input/output ports in the filter 10b.

### (Signal pattern)

The signal pattern 14a provided to the inner layer LI1 includes the line 140a, resonators 141a to 146a, which are resonators in six stages, and the line 147a.

The resonators 141a to 146a are arranged so as to be spaced from each other so that adjacent ones of the resonators are spaced from each other at a given interval. In one aspect of the present invention, the number of resonators is not limited to six, but can be selected as appropriate in order to achieve desired reflection characteristics and desired transmission characteristics. It should be noted that the number of resonators is preferably an even number.

In this embodiment, the signal pattern 14a is provided so as to be spaced from each of the ground conductor layers 12 and 13 and to be interposed between the ground conductor layers 12 and 13. In this embodiment, the signal pattern 14a is provided to the inner layer LI1.

As illustrated in (a) of Fig. 1, the lines 140a and 147a and the resonators 141a to 146a constituting the signal pattern 14a are each constituted by a strip-shaped conductor. The resonators 141a to 146a are formed by bending respective strip-shaped conductors constituting them so that paired end parts thereof each form a gap, in the inner layer LI1. In this embodiment, the signal pattern 14a is made of copper. Note that the conductor constituting the signal pattern 14a is not limited to copper, and may alternatively be, for example, gold or aluminum.

In this embodiment, (1) coupling between the resonators 141a and 142a, (2) coupling between the resonators 142a and 143a, (3) coupling between the resonators 143a and 144a, (4) coupling between the resonators 144a and 145a, (5) coupling between the resonators 145a and 146a, and (6) coupling between the resonators 141a and 146 are mostly magnetic, whereas (7) coupling between the resonators 142a and 145a is mostly electrostatic. Note, however, that the configuration of the signal pattern 14a is not limited to this, and can be designed as appropriate to achieve a bandpass filter having desired transmission characteristics.

Lands are formed at the respective tip end parts of the lines 140a and 147a so as to overlap the lands 123a and 124a in a plan view, although not illustrated in (a) of Fig. 1 in order to make it easier to see how the tip end parts of the lines 140a and 147a overlap the lands 123a and 124a, respectively. Note that the tip end parts of the lines 140a and 147a refer to end parts to which the resonators 141a and 146a are not connected, respectively.

In the inner layer LI1, lands separate from the lands formed in the tip end parts of the lines 140a and 147a are formed in areas overlapping, in a plan view, the through vias 171a described later. The lands are also referred to as lands for the through vias 171a.

### (Via)

The vias 161a and 162a are tubular members that are each made of a conductor and that are provided in the substrate 111, which is one of the two substrates 111 and 112 constituting the multilayer substrate 11. Alternatively, the vias 161a and 162a may be columnar members each made of a conductor.

In a plan view, the via 161a is provided in an area where the land 123a provided in the ground conductor layer 12, and the tip end part of the line 140a overlap each other. The via 161a allows the land 123a and the tip end part of the line 140a to be short-circuited to each other. In a plan view, the via 162a is provided in an area where the land 124a provided in the ground conductor layer 12, and the tip end part of the line 147a overlap each other. The via 162a allows the land 124a and the tip end part of the line 147a to be short-circuited to each other. That is, the land 123a is connected to the land formed in the tip end part of the line 140a, via the via 161a. Further, the land 124a is connected to the land formed in the tip end part of the line 147a, via the via 162a. The tip end parts of the lines 140a and 147a constitute both end parts of the signal pattern 14a.

### (Through via)

The eleven through vias 171a are tubular members each made of a conductor, and are provided in the multilayer substrate 11 so as to penetrate through the multilayer substrate 11 from the main surface 11a to the main surface 11b thereof. In each of the through vias 171a, an end part of a part penetrating through the substrate 111 and an end part of a part penetrating through the substrate 112 are connected to each other by a land for the through via 171a formed in the inner layer LI1. Note that the through vias 171a may be alternatively columnar members each made of a conductor. Each of the through vias 171a configured as above allows the ground conductor layer 12 and the ground conductor layer 13 to be short-circuited to each other via the land formed in the inner layer LI1. In (a) of Fig. 1, the reference signs of some of the through vias are omitted.

### (Shapes of two filters)

As illustrated in (a) of Fig. 1, the filter group 10 is configured so that the filter 10a and the filter 10b have mirror symmetrical shapes (in particular, so that the signal pattern 14a and the signal pattern 14b are mirror symmetrical). Note, however, that it is also possible that, like the filter group 10A illustrated in Fig. 2, a filter 10aA and a filter 10bA are configured to have congruent shapes (in particular, the signal pattern 14a and the signal pattern 14b have congruent shapes). In other words, it is also possible that the filter 10aA and the filter 10bA are configured to have translationally symmetrical shapes. In a case where the filter 10a and the filter 10b are configured to be mirror symmetrical, an arrangement is also possible in which the filter 10a and the filter 10b are swapped. In this case, distances between the paired input/output ports of the filter 10a and the paired input/output ports of the filter 10b are become wider than those in the filter group 10 illustrated in (a) of Fig. 1 and those in the filter group 10A illustrated in Fig. 2.

### Embodiment 2

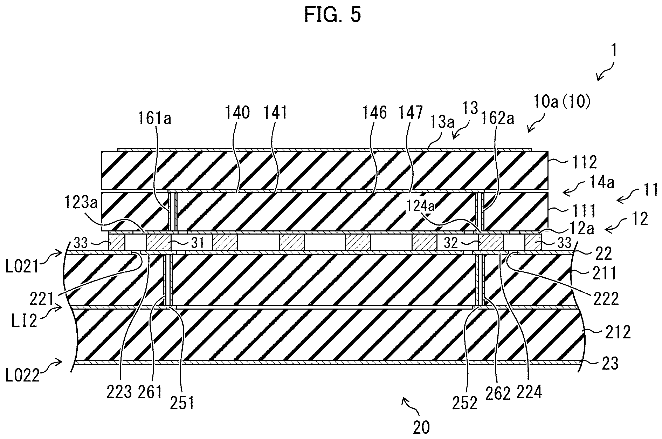

With reference to Figs. 3 to 5, the following description will discuss a wireless communication module 1 in accordance with Embodiment 2 of the present invention. Fig. 3 is a block diagram illustrating the wireless communication module 1. Fig. 4 is a plan view schematically illustrating the wireless communication module 1. Fig. 5 is a cross-sectional view illustrating filter groups 10 and a multilayer substrate 20 that are included in the wireless communication module 1. In Fig 4, an antenna 50 is not illustrated.

As illustrated in Fig. 3 and Fig. 4, the wireless communication module 1 includes two filter groups 10, the multilayer substrate 20, a frequency converter 30, eight amplifier phase shifters 40, and an antenna 50. Note that in Fig. 3, the two filter groups 10 are illustrated as one block, and the eight amplifier phase shifters 40 are illustrated as one block.

The filter groups 10 included in the wireless communication module 1 are each the same as the filter group 10 described in Embodiment 1. Therefore, in this embodiment, the filter groups 10 are not described. The multilayer substrate 11 included in the filter group 10 is one example of a first substrate.

The frequency converter 30, the filter groups 10, the amplifier phase shifters 40, and the antenna 50 are mounted on the multilayer substrate 20 in this order.

The wireless communication module 1 is configured as in the case of the wireless communication module disclosed in Patent Literature 1. Therefore, the frequency converter 30, the amplifier phase shifters 40, and the antenna 50 are not described. Note, however, that in the wireless communication module 1, high-frequency signals are inputted from the frequency converter 30 to the filter 10a and the filter 10b. In the wireless communication module 1, the high-frequency signal that has passed through one filter (for example, the filter 10a) is used for V-polarized wave, and the high-frequency signal that has passed through the other filter (for example, the filter 10b) is used for H-polarized wave. The high-frequency signals output from the filters 10a and 10b are each branched into four, and are then inputted to the amplifier phase shifters 40. The wireless communication module 1 configured as above can radiate a V-polarized wave and an H-polarized wave from the antenna 50 connected to the amplifier phase shifters 40.

The following description will discuss mounting of the filter groups 10 on the multilayer substrate 20. Fig. 5 illustrates a filter group 10 that has been mounted on the multilayer substrate 20. The multilayer substrate 20 includes substrates 211 and 212, an adhesive layer, a ground conductor layer 22, and a ground conductor layer 23. In Fig 5, the adhesive layer is not illustrated. The substrate constituting the wireless communication module 1 is not limited to a multilayer substrate such as the multilayer substrate 20, and may alternatively be a single-layer substrate.

The substrates 211 and 212 are two plate-like members each made of a dielectric. In the state illustrated in Fig. 2, the substrate 211 is a substrate closer to the filter group 10, and the substrate 212 is disposed below the substrate 211. Hereinafter, one of the paired main surfaces of the substrate 211 which one is farther from the substrate 212 will be referred to as an outer layer LO21, one of the paired main surfaces of the substrate 212 which one is farther from the substrate 211 will be referred to as an outer layer LO22, and a layer between the substrates 211 and 212 will be referred to as an inner layer LI2. The adhesive layer is provided to the inner layer LI2, and bonds the substrates 211 and 212 to each other.

The ground conductor layer 22 is constituted by a conductor film provided to the outer layer LO21. The ground conductor layer 23 is constituted by a conductor film provided to the outer layer LO22. The ground conductor layers 22 and 23 constitute a strip line, together with the lines 251 and 252 described later.

As illustrated in Fig. 5, the ground conductor layer 22 has anti-pads 221 and 222. Hereinafter, an area surrounded by the anti-pad 221 will be referred to as a land 223, and an area surrounded by the anti-pad 222 will be referred to as a land 224. In this embodiment, a center-to-center distance between the lands 223 and 224 is equal to a center-to-center distance between the lands 123a and 124a.

The lines 251 and 252 are linear long narrow conductors provided in the inner layer LI2. In a plan view, the line 251 has one end part overlapping the land 223. In a plan view, the line 252 has one end part overlapping the land 224. As described above, the lines 251 and 252 constitute the strip line, together with the ground conductor layers 22 and 23.

The vias 261 and 262 are tubular members each made of a conductor, and are provided in the substrate 211, which is one of the two substrates 211 and 212 constituting the multilayer substrate 20. Alternatively, the vias 261 and 262 may be columnar members each made of a conductor.

In a plan view, the via 261 is provided in an area where the land 223 provided in the ground conductor layer 22, and one end part of the line 251 overlap each other. The via 261 allows the land 223 and the one end part of the line 251 to be short-circuited to each other. The via 262 is provided in an area where the land 224 provided in the ground conductor layer 22, and one end part of the line 252 overlap each other. The via 262 allows the land 224 and the one end part of the line 252 to be short-circuited to each other.

The land 223 and the via 261 function as one of paired input/output ports in the multilayer substrate 20. Similarly, the land 224 and the via 262 function as one of paired input/output ports in the multilayer substrate 20.

In this embodiment, the filter 10a is mounted on the multilayer substrate 20 via solder bumps 31, 32, and 33. Similarly, the filter 10b is mounted on the multilayer substrate 20 via solder bumps. That is, the filter groups 10 are mounted on the multilayer substrate 20 via the solder bumps.

The solder bump 31 allows electrical connection between the lands 123a and 223, and fixes the filter 10a to the multilayer substrate 20. The solder bump 32 allows electrical connection between the lands 124a and 224, and fixes the filter 10a to the multilayer substrate 20. The plurality of solder bumps 33 allow the ground conductor layer 12 and the ground conductor layer 22 to be short-circuited to each other, and fix the filter 10a to the multilayer substrate 20.

As described above, the filter group 10 can be easily mounted to the multilayer substrate 20 with a small loss.

### (Supplementary note)

The present invention is not limited to Embodiments 1 and 2 above, but can be altered by a skilled person in the art within the scope of the claims. An embodiment derived from a proper combination of technical means each disclosed in a different embodiment is also encompassed in the technical scope of the present invention.

### Examples

The following description will discuss Examples 1 to 3 of the present invention and Comparative Example of the present invention.

Example 1 is the filter group 10 illustrated in Fig. 1. That is, a conductor pattern in which the area 12a and the area 12b were continuous was employed as the ground conductor layer 12, and a conductor pattern in which the area 13a and the area 13b were disconnected was employed as the ground conductor layer 13.

Example 2 is a filter group which is based on the filter group 10 illustrated in Fig. 1 and in which a conductor pattern in which the area 12a and the area 12b were disconnected was employed as the ground conductor layer 12, and a conductor pattern in which the area 13a and the area 13b were disconnected was employed as the ground conductor layer 13.

Example 3 is a filter group which is based on the filter group 10 illustrated in Fig. 1 and in which a conductor pattern in which the area 12a and the area 12b were continuous was employed as the ground conductor layer 12, and a conductor pattern in which the area 13a and the area 13b were disconnected was employed as the ground conductor layer 13.

Comparative Example is a filter group which is based on the filter group 10 illustrated in Fig. 1 and in which a conductor pattern in which the area 12a and the area 12b were continuous was employed as the ground conductor layer 12, and a conductor pattern in which the area 13a and the area 13b were continuous was employed as the ground conductor layer 13.

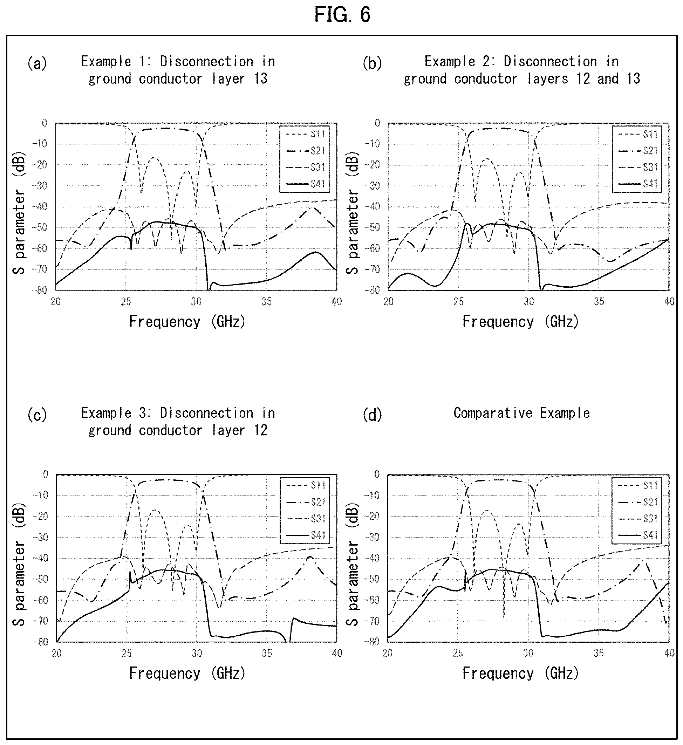

In these Examples 1 to 3, the lands 123a and 124a of the filter 10a are defined respectively as ports 1 and 2, and the lands 123b and 124b of the filter 10b are defined respectively as ports 3 and 4. This definition of the ports 1 to 4 also applies to Comparative Example. Then, S parameters S11, S21, S31, and S41 were measured for Examples 1 to 3 and Comparative Example. (a) to (c) of Fig. 6 are graphs showing frequency dependencies of the S parameters in Examples 1 to 3, respectively and (d) of Fig. 6 is a graph showing frequency dependencies of the S parameters in Comparative Example.

(a) to (d) of Fig. 6 show that the maximum value of the S parameter S41 was -47.23 dB in Example 1, -48.01 dB in Example 2, -45.38 dB in Example 3, and -45.16 dB in Comparative Example.

The above result showed that the isolation between the filter 10a and the filter 10b can be improved by disconnecting the area (first area) overlapping the signal pattern 14a and the area (second area) overlapping the signal pattern 14b in at least one of the ground conductor layers 12 and 13.

It was also found that in a case where the first area and the second area are disconnected in one of the ground conductor layers 12 and 13, the disconnection in the ground conductor layer 13 has a higher effect on improving isolation.

It was also found that disconnecting the first area and the second area in both the ground conductor layers 12 and 13 has the highest effect on improving isolation.

Aspects of the present invention can also be expressed as follows:
A filter group in accordance with Aspect 1 of the present invention includes a first filter and a second filter that are formed in a single multilayer substrate. In order to solve the foregoing problem, in the filter group, the first filter and the second filter each include a strip line constituted by a signal pattern formed in an inner layer of the multilayer substrate and paired ground conductor layers that are formed on respective paired main surfaces of the multilayer substrate and that sandwich the signal pattern, the paired ground conductor layers each include, in a case where the signal pattern is seen in a plan view, a first area overlapping the signal pattern of the first filter and a second area overlapping the signal pattern of the second filter, and the first area and the second area in at least one of the paired ground conductor layers are disconnected from each other.

According to the above configuration, the first area and the second area in at least one of the paired ground conductor layers are disconnected, so that it is possible to improve isolation between the first filter and the second filter.

In a filter group in accordance with Aspect 2 of the present invention, in addition to the configuration of the filter group in accordance with Aspect 1 above, a configuration is employed in which in a case where the signal pattern is seen in a plan view, the signal pattern of the first filter and the signal pattern of the second filter have congruent shapes or mirror symmetrical shapes.

According to the above configuration, the first filter and the second filter are designed so that the signal patterns thereof have congruent shapes or mirror symmetrical shapes, and therefore, the first filter and the second filter are substantially the same filter.

Even in a case where the first filter and the second filter are substantially the same filter as above, crosstalk between the first filter and the second filter causes filter characteristics of the filter group illustrated in (a) and (c) of Fig. 3 of Non-patent literature 1 to deteriorate. The filter group in accordance with Aspect 2 makes it possible to improve isolation between the filters, and thus is preferable also in a case where the first filter and the second filter are substantially the same filter.

In a filter group in accordance with Aspect 3 of the present invention, in addition to the configuration of the filter group in accordance with Aspect 1 or 2 above, a configuration is employed in which in one ground conductor layer of the paired ground conductor layers, paired lands functioning as paired input/output ports in the first filter are formed in the first area, and paired lands functioning as paired input/output ports in the second filter are formed in the second area, the paired lands formed in the first area are each connected to the signal pattern of the first filter via a via, and the paired lands formed in the second area are each connected to the signal pattern of the second filter via a via.

According to the above configuration, the paired input/output ports of each filter can be formed in one ground conductor layer of the paired ground conductor layers, so that it is possible to, for example, using solder bumps, easily mount the filter group on another substrate.

In a filter group in accordance with Aspect 4 of the present invention, in addition to the configuration of the filter group in accordance with Aspect 3 above, a configuration is employed in which the first area and the second area in another ground conductor layer of the paired ground conductor layers are disconnected from each other.

According to the above configuration, it is possible to further improve isolation between the first filter and the second filter, compared to the case where the first area and the second area are disconnected in the one ground conductor layer, among the paired ground conductor layers, in which the paired input/output ports are provided.

In a filter group in accordance with Aspect 5 of the present invention, in addition to the configuration of the filter group in accordance with Aspect 4 above, a configuration is employed in which the first area and the second area in the one ground conductor layer of the paired ground conductor layers are disconnected from each other.

According to the above configuration, it is possible to further improve isolation between the first filter and the second filter, compared to the case where the first area and the second area are disconnected only in the another ground conductor layer of the paired ground conductor layers.

A wireless communication module in accordance with Aspect 6 of the present invention includes: the multilayer substrate as a first substrate; a second substrate; a frequency converter; the filter group in accordance with any one of Aspects 3 to 5 above; an amplifier phase shifter; and an antenna. In the wireless communication module, the frequency converter, the filter group, the amplifier phase shifter, and the antenna are mounted on the second substrate in this order, and the lands of the filter group and the second substrate are connected to each other.

The above configuration exerts the same effect as the filter group in accordance with Aspect 1 is achieved.

### Reference Signs List

1 Wireless communication module
10, 10A Filter group
10a, 10b, 10aA, 10bA Filter
11 Multilayer substrate
12, 13 Ground conductor layer
12a, 13a Area (first area)
12b, 13b Area (second area)
14a, 14b Signal pattern
123a, 124a Land (paired input/output ports)
161a, 162a, 161b, 162b Via
20 Multilayer substrate
30 Frequency converter
40 Amplifier phase shifter
50 Antenna

## Claims

1. A filter group including a first filter and a second filter that are formed in a single multilayer substrate,
the first filter and the second filter each including a strip line constituted by a signal pattern formed in an inner layer of the multilayer substrate and paired ground conductor layers that are formed on respective paired main surfaces of the multilayer substrate and that sandwich the signal pattern,
the paired ground conductor layers each including, in a case where the signal pattern is seen in a plan view, a first area overlapping the signal pattern of the first filter and a second area overlapping the signal pattern of the second filter,
the first area and the second area in at least one of the paired ground conductor layers being disconnected from each other.

2. The filter group according to claim 1, wherein in a case where the signal pattern is seen in a plan view, the signal pattern of the first filter and the signal pattern of the second filter have congruent shapes or mirror symmetrical shapes.

3. The filter group according to claim 1, wherein
in one ground conductor layer of the paired ground conductor layers, paired lands functioning as paired input/output ports in the first filter are formed in the first area, and paired lands functioning as paired input/output ports in the second filter are formed in the second area,
the paired lands formed in the first area are each connected to the signal pattern of the first filter via a via, and
the paired lands formed in the second area are each connected to the signal pattern of the second filter via a via.

4. The filter group according to claim 3, wherein the first area and the second area in another ground conductor layer of the paired ground conductor layers are disconnected from each other.

5. The filter group according to claim 4, wherein the first area and the second area in the one ground conductor layer of the paired ground conductor layers are disconnected from each other.

6. A wireless communication module comprising:
the multilayer substrate as a first substrate;
a second substrate;
a frequency converter;
the filter group according to any one of claims 3 to 5;
an amplifier phase shifter; and
an antenna,
the frequency converter, the filter group, the amplifier phase shifter, and the antenna being mounted on the second substrate in this order,
the lands of the filter group and the second substrate being connected to each other.
